## Europäisches Patentamt
## European Patent Office
## Office européen des brevets

(19)

(11) Publication number: **0 266 215**
**A2**

# EUROPEAN PATENT APPLICATION

(12)

(21) Application number: **87309617.6**

(22) Date of filing: **30.10.87**

(51) Int. Cl.⁴: **G 01 F 1/32**

(30) Priority: **30.10.86 GB 8625963**

(43) Date of publication of application:
**04.05.88 Bulletin 88/18**

(84) Designated Contracting States:
**DE ES FR GB GR IT**

(71) Applicant: **BROWN BOVERI KENT PLC**
**Biscot Road**
**Luton Bedfordshire LU3 1AL (GB)**

(72) Inventor: **Adams, Brian Edward**
**Tudor House, West Mill Lane, Icklesord**
**Hitchin, Hertfordshire SG5 3RN (GB)**

(74) Representative: **Pritchard, Colin Hubert et al**
**Mathys & Squire 10 Fleet Street**
**London EC4Y 1AY (GB)**

(54) **Frequency sensing devices.**

(57) A device such as a vortex flowmeter wherein the magnitude of a physical parameter is determined by sensing the frequency of vibration of a sensing body which is caused to vibrate at a frequency representative of the parameter. In the case of a flowmeter, the sensing body extends into a fluid at a location downstream of a bluff body. Vortices generated by the bluff body cause the sensing body to vibrate at a frequency representative of the flowrate. A flexible element is secured to the sensing body and to a support for the sensing body at respective first and second locations. Between these first and second locations the flexible element has a curved section. Vibration of the sensing body varies the distance between the first and second locations and causes the curved section of the flexible element to vibrate in a direction transverse to the vibratory movement of the sensing body and with a greater amplitude. The vibration of the flexible element modulates radiation conveyed thereto by optical fibres.

FIG. 3

Description

This invention relates to the sensing of the frequency of vibration of bodies.

A known form of flowmeter operates by generating vortices in a fluid flowing along a pipe or conduit. The frequency at which the vortices are generated is proportional to the rate of flow of the fluid over a wide range of flowrates. Accordingly, the flowrate is determined by measuring the frequency of vortex generation.

For generating the vortices a bluff body extends from a support into the path of the fluid, perpendicular to the direction of flow. Vortices are generated alternately on one side of the body and then on the other side. The rate at which the vortices are generated is detected by sensing means which either detect the vortices directly or detect the effect of hydrodynamic forces exerted by the vortices on the bluff body itself or on a sensing body disposed downstream of the bluff body.

The effect of the hydrodynamic forces on the bluff body or the downstream body is to cause that body to vibrate at a frequency equal to the frequency at which the vortices are generated. Vibration may be detected by any of the known displacement or force sensing transducer systems, eg. optical, capacitive, inductive or piezo-electric, strain gauge, etc.

U.K. specification No. 2 129 937 discloses a vortex meter having an elongate sensing body for detecting vortices. The sensing body is supported at one end thereof on a side wall of a housing through which a fluid flows. At its supported end the sensing body has a hollow end section, and an indicating element extends coaxially of the end section from a closed end of the section to a location outside the housing. The sensing body and the indicating element are so arranged that there is a prdetermined location on the element which vibrates in accordance with vibrations induced in the body by the vortices. If the housing is subjected to spurious vibrations by an adjacent pump or machinery, however, the predetermined location on the indicating element is substantially unaffected. Vibrations at the predetermined location are sensed by an optical or piezo-electric sensing device.

In both optical and piezo-electric versions the amplitude of the vibrations at the predetermined location on the indicating element is determined by the pressures built up by the vortices, the required degree of immunity from spurious vibrations, and the fluid pressure. For a practical device the amplitude of the vibrations is very small, varying from $2 \times 10^{-6}$ m. for a water velocity of 10 m./sec. down to $0.001 \times 10^{-6}$ m. for a water velocity of 0.25 m./sec. It is essential therefore to have a very sensitive device for sensing movement of the indicating element.

It is also important to have a sensing device which is not substantially affected by radiation at radio frequencies or by electro-magnetic interference along a transmission line extending between the meter and a control station.

According to the present invention there is provided apparatus for sensing the magnitude of a physical parameter, the apparatus comprising a sensing body which is adapted to vibrate at a frequency representative of the said parameters, a flexible element which is fixedly secured relative to the body at a first location on the element and is fixedly secured relative to a support for the body at a second location on the element, the flexible element comprising a curved section which is disposed between the first and second locations and the body being so arranged that vibration thereof which varies the distance between the first and second locations, whereby a part of the curved section of the element is caused to vibrate in a direction transverse to the direction of vibratory movement at the first location and with an amplitude greater than the amplitude of the said vibratory movement, optical fibre means for conveying radiation towards the curved section of the element, whereby the radiation is modulated by the vibratory movement of the section, and for conveying modulated radiation away from the element, and means for sensing the frequency of the modulation of the radiation.

According to the invention there is also provided a flowmeter comprising a bluff body, an elongate sensing body, and means for supporting the bluff body and the sensing body so that each body extends into a fluid flowing through the flowmeter, the bluff body causing vortices to be generated in the fluid at a rate representative of the rate of flow of the fluid and the sensing body being located downstream of the bluff body and being caused to vibrate by hydrodynamic forces exerted thereon by the vortices, wherein a flexible element which is fixedly secured relative to the sensing body and to the supporting means at respective first and second locations on the element, the flexible element comprises a curved section which is disposd between the first and second locations, the sensing body is so arranged that vibration thereof varies the distance between the first and second locations, whereby a part of the curved section of the element is caused to vibrate in a direction transverse to the direction of vibratory movement at the first location and with an amplitude greater than the amplitude of the said vibratory movement, optical fibre means are provided for conveying radiation towards the curved section of the element, whereby the radiation is modulated by the vibratory movement of the section, and for conveying modulated radiation away from the element, and means are provided for sensing the frequency of the modulation of the radiation.

Suitably, the flexible element is formed as a thin strip.

Suitably, each of the first and second locations on the flexible element is inclined at a small angle to a straight line joining the said first and second locations.

Suitably, the optical fibre means are arranged to convey radiation towards a face of the said curved section of the element and to convey radiation reflected by the said section and modulated by the vibration thereof away from the said section.

Suitably, the means for supporting the bluff body and the sensing body is a housing adapted for connection between two sections of a pipe along which the fluid flows.

The sensing body may be supported by the housing at or near one end of the body or at or near each end thereof.

Preferably, an indicating element extends from a predetermined axial location on the sensing body to a location outside the housing, and the flexible element is fixedly secured to the indicating element at the said first location on the flexible element.

Preferably, the sensing body and the indicating element are so arranged that when the housing is subjected to a force which causes accelerative movement of the side wall in a direction in which the hydrodynamic forces are applied to the sensing body, the location on the indicating element at which the element is fixedly secured to the flexible element effects zero or substantially zero movement relative to the housing, whereas when the sensing body is caused to vibrate by the said hydrodynamic forces the said location on the indicating element moves in a manner representing the combined linear and angular movement of the predetermined location on the sensing body.

Preferably, the sensing body has a hollow end section, the body is supported at or near an open end of the section, the predetermined location on the sensing body is a location which, in use, is located in the fluid, and the indicating element extends from the said predetermined location on the sensing body via the interior of the hollow end section of the body.

Suitably, the said location on the indicating element is located exteriorly of the hollow end section of the sensing body.

The invention will now be described, by way of example, with reference to the accompanying drawings, in which:-

Figure 1 is a diagrammatic perspective view of a vortex flowmeter according to the invention;

Figure 2 is an axial section of the flowmeter of Figure 1;

Figure 3 is a diagrammatic side elevation of a part of the sensing means in the flowmeter of Figure 1; and

Figure 4 is a diagrammatic perspective view of that part of the sensing means shown in Figure 3.

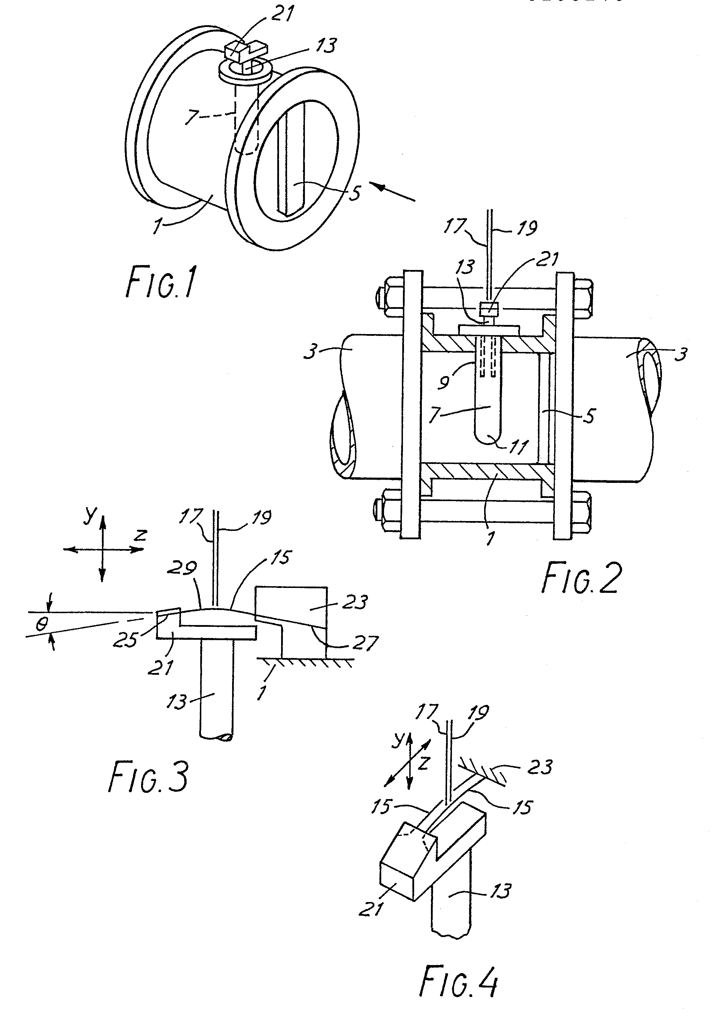

Referring to Figures 1 and 2 of the drawings, a flowmeter according to the invention has a flanged cylindrical housing 1 which, in use, is clamped between flanged sections 3 of a pipe along which a fluid is flowing.

Extending diametrically across the housing 1 is a bluff body 5 for causing vortices to be generated in the fluid. A central part of the bluff body 5 is rectangular in section and is immersed in fluid. At each end of the body 5 there is an end part which is welded to the wall of the housing 1.

Associated with the bluff body 5 are sensing means for sensing the frequency at which vortices are generated in the fluid. The sensing means include an elongate sensing body 7 which is arranged downstream of the body 5 and extends parallel with that body. The sensing body 7 is flexibly supported at one end only, by engagement of part of an end section 9 in a further aperture in the wall of the housing 1. A main section 11 of the body 7 extends outwardly from the end section 9 to a position adjacent a diametrically opposed location on the wall of the housing 1.

The body 7 is circular in section and the end section 9 is formed as a hollow cylinder which is open at its outer end. An indicating element 13 extends coaxially of the end section 9, from a closed end of the section, hereinafter described as a predetermined location on the body 7, to a location outwardly beyond the open end of the section. The element 13 is supported by engagement of a threaded end part thereof in an aperture extending from the closed end of section 9 into the main section 11.

As hereinafter described, vortices generated by the bluff body 5 cause a bending movement of the sensing body 7 and the indicating element 13. For sensing movement of the element 13, an optical sensing device, shown diagrammatically in Figures 3 and 4, is provided. The sensing device includes a flexible element 15 and optical fibres 17 and 19.

The flexible element 15 of the sensing device is supported by means of a head 21 on the indicating element 13 and a support 23 on the housing 1 of the flowmeter. The element 15 is formed of a thin metal strip having a first end section 25 clamped between parts of the head 21, a second end section 27 clamped between parts of the support 23, and a central section 29 which is located between the head 21 and the support 23.

Prior to the mounting, the strip forming the element 15 is planar and the length of the central section 29 is greater than the spacing between the head 21 and the support 23. Accordingly, mounting the element 15 involves forcing opposed end sections 25 and 27 towards one another so that section 29 assumes a curved shape, as shown in Figure 3 of the drawings. As also shown in Figure 3, each of the end sections 25 and 27 is inclined at a small angle θ to a straight line joining the location at which the element 15 is fixedly secured relative to indicating element 13 (ie. the junction between sections 25 and 29) and the location at which the element 15 is fixedly secured relative to the housing 1 (ie. the junction between sections 27 and 29).

The optical fibres 17 and 19 are parallel with each other and perpendicular to a face of the central section 29 of the flexible element 15. Light from a source at a control station is conveyed along the fibre 17 and is then directed on to the section 29. A portion of the light reflected from the section 29 enters the fibre 19 and is thereby conveyed to a frequency sensing apparatus at the control station.

In use of the flowmeter shown in Figures 1 and 2, vortices are generatd in fluid flowing past the bluff body 5, alternately on one side of the body and then on the other. As each vortex moves downstream past the sensing body 7, hydrodynamic forces are exerted on the body. The forces are applied to the body 7 in a direction which is perpendicular to the direction of fluid flow and perpendicular to the axis of the body ie, along the Z axis of Figures 3 and 4. The forces due to one vortex are in one sense and those arising from the next vortex being in the opposite sense. These forces cause the body 7 to vibrate in a direction along the Z axis, the body vibrating first in one sense and then in the opposite sense.

As described in specification No. 2 129 937, the dimensions of the sensing body 7 and the indicating element 13 are so arranged that the element 13 flexes under linear acceleration or vibration conditions so that there is no resultant movement of the head 21 if the housing 1 is subjected to spurious vibrations by the action of pumps or adjacent machinery.

Referring now to Figures 3 and 4, vortices generated in fluid flowing through the meter cause the sensing body 7, the indicating element 13 and the head 21 to vibrate with movements in directions along a Z-axis, which is perpendicular to the direction of fluid flow and perpendicular to the axis of the body 7. Vibration of the head 21 varies the spacing between the head 21 and the support 23, and hence the distance between the first location at which the element 15 is secured to the head 21 and the second location at which the element 15 is secured to the support 23. The curvature of the central section 29 of the element 15 is therefore varied ie. the section vibrates with movements in directions along the y-axis of Figures 3 and 4, ie. transversely of the directions of movement in the vibratory movement at the first location.

The proportion of light from the fibre 17 which is reflected back to the fibre 19 varies according to the spacing between the section 29 of element 15 and the adjacent ends of the fibres. Accordingly, the intensity of the light entering the fibre 19 is modulated at a frequency equal to the frequency of vibration of the section 29, and hence equal to the frequency of vibration of the body 13 and the frequency of vortex shedding. The frequency of the light modulation is determined at the control station, as indicated above.

It will be appreciated that vibration of the head 21 imparts a vibration of greater amplitude to the central part of the section 29. The magnitude of this vibration of the section 29 depends upon the angle $\Theta$, the manner in which the element 15 is secured to the head 21 and the support 23, and the relative stiffnesses of the element 15 and the sensing body 7, the indicating element 13 and the head 21. The stiffness of the element 15 in the direction of the z-axis is small relative to the stiffness of the sensing body 7, the element 13 and the head 21 so that the body 7 is not appreciably loaded.

The fibres 17 and 19 extend perpendicularly of the section 29 of the element 15 and a maximum sensitivity is obtained when the fibres are adjacent to the centre of that section.

In alternative forms of flowmeter according to the invention, the sensing body for the vortices consists of a rod or beam which spans the path of the fluid and is supported at both ends. One end-support for the body must always be flexible, but the other can be either flexible or rigid.

In one of these alternative forms the rod or beam has an extension at one or both of the flexibly-supported ends. The or each extension of the rod or beam passes through the flexible support in such a way that movements of the outer end of the extension follow the deflection of the main part of the beam between its supports.

This extension serves a very similar function to the element 13 of Figures 1 to 4 and by use of appropriate proportions it is possible to made the device insensitive to linear vibrations also.

Types of flexible supports which may be used include cylindrical cantilevers of the type shown as 9 in Figures 1 and 2 and flat diaphragms.

The behaviour of a flowmeter having a sensing body and an indicating element formed of a rod supported between two diaphragms is described in specification No. 2 129 937.

Apart form flowmeters, vibratory bodies having a frequency of vibration which represents the magnitude of a physical parameter are also included in other devices. In such devices a flexible element may be fixedly secured relative to the body and relative to a support for the body, as in the case of the element 15 above, and the frequency of vibration of the element sensed by radiation conveyed to and from the element by optical fibre means.

**Claims**

1. Apparatus for sensing the magnitude of a physical parameter, the apparatus comprising a sensing body which is adapted to vibrate at a frequency representative of the said parameters, a flexible element which is fixedly secured relative to the body at a first location on the element and is fixedly secured relative to a support for the body at a second location on the element, the flexible element comprising a curved section which is disposed between the first and second locations and the body being so arranged that vibration thereof which varies the distance between the first and second locations, whereby a part of the curved section of the element is caused to vibrate in a direction transverse to the direction of vibratory movement at the first location and with an amplitude greater than the amplitude of the said vibratory movement, optical fibre means for conveying radiation towards the curved section of the element, whereby the radiation is modulated by the vibratory movement of the section, and for conveying modulated radiation away from the element, and means for sensing the frequency of the modulation of the radiation.

2. A flowmeter comprising a bluff body, an elongate sensing body, and means for supporting the bluff body and the sensing body so that each body extends into a fluid flowing through

**0 266 215**

the flowmeter, the bluff body causing vortices to be generated in the fluid at a rate representative of the rate of flow of the fluid and the sensing body being located downstream of the bluff body and being caused to vibrate by hydrodynamic forces exerted thereon by the vortices, wherein a flexible element which is fixedly secured relative to the sensing body and to the supporting means at respective first and second locations on the element, the flexible element comprises a curved section which is disposed between the first and second locations, the sensing body is so arranged that vibration thereof varies the distance between the first and second locations, whereby a part of the curved section of the element is caused to vibrate in a direction transverse to the direction of vibratory movement at the first location and with an amplitude greater than the amplitude of the said vibratory movement, optical fibre means are provided for conveying radiation towards the curved section of the element, whereby the radiation is modulated by the vibratory movement of the section, and for conveying modulated radiation away from the element, and means are provided for sensing the frequency of the modulation of the radiation.

3. A flowmeter as claimed claim 2, wherein the flexible element is formed as a thin strip.

4. A flowmeter as claimed in claim 2 or 3, wherein each of the first and second locations on the flexible element is inclined at a small angle to a straight line joining the said first and second locations.

5. A flowmeter as claimed in claims 2, 3 or 4, wherein the optical fibre means are arranged to convey radiation towards a face of the said curved section of the element and to convey radiation reflected by the said section and modulated by the vibration thereof away from the said section.

6. A flowmeter as claimed in any one of claims 2 to 5, wherein the means for supporting the bluff body and the sensing body comprises a housing adapted for connection between two sections of a pipe along which the fluid flows.

7. A flowmeter as claimed in claim 6, wherein an indicating element extends from a predetermined axial location on the sensing body to a location outside the housing, and the flexible element is fixedly secured to the indicating element at the said first location on the flexible element.

8. A flowmeter as claimed in claim 7, wherein the sensing body and the indicating element are so arranged that when the housing is subjected to a force which causes accelerative movement of the side wall in a direction in which the hydrodynamic forces are applied to the sensing body, the location on the indicating element at which the element is fixedly secured to the flexible element effects zero or substantially zero movement relative to the housing, whereas when the sensing body is caused to vibrate by the said hydrodynamic forces the said location on the indicating element moves in a manner representing the combined linear and angular movement of the predetermined location on the sensing body.

9. A flowmeter as claimed in claim 8, wherein the sensing body has a hollow end section, the body is supported at or near an open end of the end section, the predetermined location on the sensing body is a location which, in use, is located in the fluid, and the indicating element extends from the said predetermined location on the sensing body via the interior of the hollow end section of the body.

10. A flowmeter as claimed in claim 9, wherein the said location on the indicating element is located exteriorly of the hollow end section of the sensing body.

0266215

*Fig.1*

*Fig.2*

*Fig.3*

*Fig.4*